(19) **Europäisches Patentamt / European Patent Office / Office européen des brevets**

(11) **EP 4 682 770 A1**

(12) **EUROPEAN PATENT APPLICATION**

(43) Date of publication:
**21.01.2026 Bulletin 2026/04**

(21) Application number: **24189887.3**

(22) Date of filing: **19.07.2024**

(51) International Patent Classification (IPC):
**G06N 3/096** (2023.01)   **G06N 3/045** (2023.01)
**G06V 10/82** (2022.01)

(52) Cooperative Patent Classification (CPC):
**G06N 3/045; G06N 3/096; G06V 10/82;** G06N 3/09

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **TOYOTA JIDOSHA KABUSHIKI KAISHA**
  **Aichi-ken, 471-8571 (JP)**
• **The Chancellor, Masters and Scholars of the University of Cambridge**
  **Cambridge CB2 1TN (GB)**

(72) Inventors:
• **ALJUNDI, Rahaf**
  **1140 BRUSSELS (BE)**
• **OLMEDA REINO, Daniel**
  **1140 BRUSSELS (BE)**
• **PANOS, Aristeidis**
  **CAMBRIDGE, CB2 1TN (GB)**
• **TURNER, Richard**
  **CAMBRIDGE, CB2 1TN (GB)**

(74) Representative: **Cabinet Beau de Loménie**
  **103, rue de Grenelle**
  **75340 Paris Cedex 07 (FR)**

Remarks:
Amended claims in accordance with Rule 137(2) EPC.

(54) **METHODS FOR ADAPTING A MODEL TO A NEW TASK**

(57)   A computer-implemented method for adapting a machine learning model to a new task is provided. The method comprises steps of: (S10) providing a model that is pre-trained for a base task, wherein the model is a transformer-based machine learning model comprising a plurality of attention heads; (S20) selecting one or more relevant attention heads among the plurality of attention heads, wherein the relevant attention heads are relevant for performing a new task; and (S30) adapting the model to the new task by updating, among the parameters of the model, only parameters of the relevant attention heads.

**FIG.1**

EP 4 682 770 A1

**Description**

BACKGROUND OF THE INVENTION

1. Field of the Invention

The invention relates to the field of machine learning. In particular, the invention relates to methods for adapting a transformer-based machine learning model to a new task.

2. Description of Related Art

Transformer-based machine learning models such as Visual-language models (VLMs) have impressive capabilities for addressing visual questioning tasks and image captioning tasks (see [REF 1]).
However, many VLMs rely on pre-trained and frozen visual encoders, such as CLIP [REF 2], which exhibit image understanding errors that propagate to the VLM response, thereby undermining their performance (see for example [REF 3]). In particular, weaknesses have been observed in the visual understanding when tackling previously unseen domains.
There is thus a need for methods to adapt and improve the visual encoders for various tasks without losing the knowledge acquired from the pre-training. More generally, there is a need for methods to adapt transformer-based models to a new task.
The following references disclose various methods relating to visual languages models, and adaptation of models to new tasks.

[REF 1] GHOSH, Akash, ACHARYA, Arkadeep, SAHA, Sriparna, et al. Exploring the frontier of vision-language models: A survey of current methodologies and future directions. arXiv preprint arXiv:2404.07214, 2024.
[REF 2] RADFORD, Alec, KIM, Jong Wook, HALLACY, Chris, et al. Learning transferable visual models from natural language supervision. In : International conference on machine learning. PMLR, 2021. p. 8748-8763.
[REF 3] ZHU, Deyao, CHEN, Jun, SHEN, Xiaoqian, et al. Minigpt-4: Enhancing vision-language understanding with advanced large language models. arXiv preprint arXiv:2304.10592, 2023.
[REF 4] HU, Edward J., SHEN, Yelong, WALLIS, Phillip, et al. Lora: Low-rank adaptation of large language models. arXiv preprint arXiv:2106.09685, 2021.
[REF 5] DAS, Srijan, DAI, Rui, KOPERSKI, Michal, et al. Toyota smarthome: Real-world activities of daily living. In : Proceedings of the IEEE/CVF international conference on computer vision. 2019. p. 833-842.
[REF 6] STALLKAMP, Johannes, SCHLIPSING, Marc, SALMEN, Jan, et al. Man vs. computer: Benchmarking machine learning algorithms for traffic sign recognition. Neural networks, 2012, vol. 32, p. 323-332.
[REF 7] SHYSHEYA, Aliaksandra, BRONSKILL, John, PATACCHIOLA, Massimiliano, et al. Fit: Parameter efficient few-shot transfer learning for personalized and federated image classification. arXiv preprint arXiv:2206.08671, 2022.
[REF 8] ZHANG, Wenxuan, JANSON, Paul, ALJUNDI, Rahaf, et al. Overcoming Generic Knowledge Loss with Selective Parameter Update. arXiv preprint arXiv:2308.12462, 2023.
[REF 9] SUN, Quan, FANG, Yuxin, WU, Ledell, et al. Eva-clip: Improved training techniques for clip at scale. arXiv preprint arXiv:2303.15389, 2023.
[REF 10] SCHUHMANN, Christoph, VENCU, Richard, BEAUMONT, Romain, et al. Laion-400m: Open dataset of clip-filtered 400 million image-text pairs. arXiv preprint arXiv:2111.02114, 2021.
[REF 11] VASWANI, Ashish, SHAZEER, Noam, PARMAR, Niki, et al. Attention is all you need. Advances in neural information processing systems, 2017, vol. 30.
[REF 12] CHEN, Jun, ZHU, Deyao, SHEN, Xiaoqian, et al. Minigpt-v2: large language model as a unified interface for vision-language multi-task learning. arXiv preprint arXiv:2310.09478, 2023.
[REF 13] LIU, Haotian, LI, Chunyuan, WU, Qingyang, et al. Visual instruction tuning. Advances in neural information processing systems, 2024, vol. 36.
[REF 14] GURARI, Danna, LI, Qing, STANGL, Abigale J., et al. Vizwiz grand challenge: Answering visual questions from blind people. In : Proceedings of the IEEE conference on computer vision and pattern recognition. 2018. p. 3608-3617.
[REF 15] KIELA, Douwe, FIROOZ, Hamed, MOHAN, Aravind, et al. The hateful memes challenge: Detecting hate speech in multimodal memes. Advances in neural information processing systems, 2020, vol. 33, p. 2611-2624.

SUMMARY OF THE INVENTION

According to aspects of the present disclosure, a computer-implemented method for adapting a machine learning model to new tasks is provided. The method comprises steps of:

- providing a model that is pre-trained for a base task, wherein the model is a transformer-based machine learning model comprising a plurality of attention heads;
- selecting one or more relevant attention heads among the plurality of attention heads, wherein the relevant attention heads are relevant for performing a new task;
- adapting the model to the new task by updating, among the parameters of the model, only parameters of the relevant attention heads.

For the sake on conciseness, the present computer-implemented method for adapting a machine learning model to new tasks is referred to hereafter to the "adaptation method".

The base task may be any task for which the model is pre-trained. Such task may comprise, for example, image segmentation tasks, point cloud segmentations tasks, classification tasks, image captioning, image language alignment, language generation.

In the present description, attention heads refer to blocks within layers of a transformer-based architecture. In particular, each attention head of a transformer-based machine learning model is configured to implement an attention mechanism through the scaled dot product attention mechanism, as defined in [REF 11].

In the present method, when adapting the model to a new task, only parameters pertaining to attention heads that are relevant to the new task are updated (modified) while keeping the rest of the parameters of the model intact. Such process thereby achieves localized updates of the parameters within attention heads that provide the main contribution to the performance of the model.

In particular, the attention heads that have a main contribution relative to the performing of the new task are identified, which are referred to as relevant attention heads. Then, the parameters of such relevant attention heads are updated using a loss function. With the present method, it is therefore possible to efficiently update the model to the new tasks in order to limit degradation of knowledge in unrelated tasks for which the model has been previously trained.

Advantageously, the method can be applied to any transformer-based model comprising one or more attention heads, or to any blocks of such model which comprises one or more attention heads. In particular, the method can be applied to a large language model and/or to the visual encoder of a visual language model.

In particular, the inventors have shown that updating only the visual encoder of a vision language model is more efficient as it contains far fewer parameters than the language model of a visual language model.

Further, the present method can advantageously be applied both to continual learning strategies, wherein a model is updated sequentially at different time steps as new training data becomes available, and to few-shot learning strategies, wherein a model is updated in a single update using a limited training dataset. Further, the present method can be applied to the update of a model by combining both the continual learning and the few-shot learning strategies.

According to aspects, the transformer-based machine learning model comprises a plurality of layers and the plurality of attention heads are comprised in at least two different layers of the plurality of layers; and the step of selecting one or more relevant attention heads among the plurality of attention heads comprises selecting one or more relevant attention heads per layer by considering independently each layer of the model.

With this configuration, the relevance of the attention heads of the machine learning model relative to the new task is evaluated layer by layer, therefore all layers of the model can be assessed individually and one or more of the most relevant attention heads in each layer may be selected for updating the parameters comprised in such attention heads.

According to aspects, the step of selecting one or more relevant attention heads among the plurality of attention heads comprises selecting one or more relevant attention heads of the model by considering globally all the layers of the model.

With this configuration, the attention heads are selected globally among the attentions heads of the model, irrespective of the layer of the model to which such attention heads pertain. This allows in particular for a smaller number of attention heads to be selected, which limits the computational requirements.

According to aspects, the step of selecting one or more relevant attention heads among the plurality of attention heads comprises providing a loss function evaluating the performance of the model applied to the new task; wherein the relevant attention heads are selected among the attention heads that cause a largest change in the loss function for data points corresponding to the new task.

According to aspects, the step of selecting one or more relevant attention heads among the plurality of attention heads comprises: for each attention head, calculating gradients of the loss function with respect to each parameter of the attention head for data points corresponding to the new task; for each attention head, calculating a cumulative gradient by adding squared values of the calculated gradients of the loss function; and selecting relevant attention heads among the attention heads that have the largest cumulative gradient.

According to aspects, the step of adapting the model to the new task by updating, among the parameters of the model, only parameters of the relevant attention heads, comprises applying a low rank update of the parameters of the relevant attention heads in order to update only an ensemble of additional parameters which are linearly added to the selected parameters (the parameters of the relevant attention head).

With this configuration, the application of a local selection of parameters within relevant attention heads is synergistically combined with a low rank update of the selected parameters in order to enhance performance of the model update and limit overfitting.

According to aspects, steps of the method are repeated so that the model is successively adapted to a plurality of new tasks.

Advantageously, in the present method, there is only a freezing of the parameters other than the relevant parameters during adaptation of the model to a new task. However, most importantly, in the present method, there is no freezing of any parameters of the model beyond the adaptation step. Therefore, when the model is adapted to a plurality of new tasks, each time the model is adapted to a new task, the new relevant parameters for such new task may be selected among the whole set of parameters within any attention head, irrespective of the previous adaptations to previous tasks (and the corresponding previous choice of relevant attention heads). This leads to substantial performance enhancements while maintaining overall robustness.

According to aspects, the model comprises a multi-layer perceptron (MLP) layer; and the method further comprises selecting relevant parameters of the multi-layer perceptron layer, wherein the relevant parameters are relevant for performing the new task; and when adapting the model to the new task, updating the multi-layer perceptron layer by modifying only some or all of the relevant parameters of the multi-layer perceptron layer.

With this configuration, the components of the model are updated differently based on their structure. In particular, MLP layers of the model are updated by only updating selected individual parameters that are evaluated as particularly relevant for the new tasks, and the attention blocks of the model are updated by selecting specifically relevant attention heads and then updating parameters within such relevant attention heads. Such configuration may in particular be combined with a low rank update of the parameters of the relevant attention heads in order to enhance performance.

According to aspects, the transformer-based model is a visual encoder model configured for extracting visual features from images, such features being representative of global dependencies in the images.

With this configuration, instead of applying the above training method to a full transformer-based model such as a visual language model, the method is specifically applied to updating parameters of the encoder part of the model, such as a visual encoder. Advantageously, separately updating the vision encoder provides a more robust alternative to the update of large language models, especially when visual shift is the primary source of errors.

According to aspects, a method for adapting a visual language model to a visual captioning task is provided, such method comprising

- providing a pre-trained visual language model comprising a pre-trained visual encoder model and a pre-trained language model;
- adapting the visual encoder model to a visual feature extraction task using the above adaptation method;
- freezing the parameters of the adapted visual encoder model;
- using the adapted vision encoder model to extract features from input images; and
- using the language model to generate, from the extracted features, visual captioning data representative of a descriptive caption of the input images.

The present disclosure is further related to a system for a driver assistance system comprising:

- a sensor unit configured to capture data from one or more sensors, wherein the data includes information about a driving scene surrounding a vehicle;
- a processing unit communicatively coupled to the sensor unit comprising
- a continual learning module configured to process the captured data and continuously update parameters of a transformer-based machine learning model based on the incoming data, in order to learn and adapt to changing driving scenarios over time, wherein the machine learning model is updated using the above-described adaptation method in order to retain knowledge from previously captured data while incorporating new data, wherein the processing unit is configured to receive processed data from the machine learning model and generate real-time predictions based on the driving scene;
- a memory unit configured to store previously captured data used for continual learning of the machine learning model; and
- a control unit configured to provide control signals to controls of the vehicle based on the real-time predictions.

With the present system, the behavior of the driving assistance system can advantageously be adapted in real-time to changing environments with an increased efficiency while limiting computational resources.

The present disclosure is further related to a computer program set including instructions for executing the steps of the above-described adaptation method when said program is executed by at least one computer. This program set can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described adaptation method. The recording medium can be any entity or device capable of storing the program. For example, For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; and magneto-optical disks.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram representing aspects of a method for adapting a model to new tasks according to the present disclosure;
FIG. 2 is a block diagram of a system implementing embodiments of a method according to the present disclosure;
FIGS. 3-4 are charts illustrating advantages of the method according to the present disclosure over other methods.

DETAILED DESCRIPTION OF EMBODIMENTS

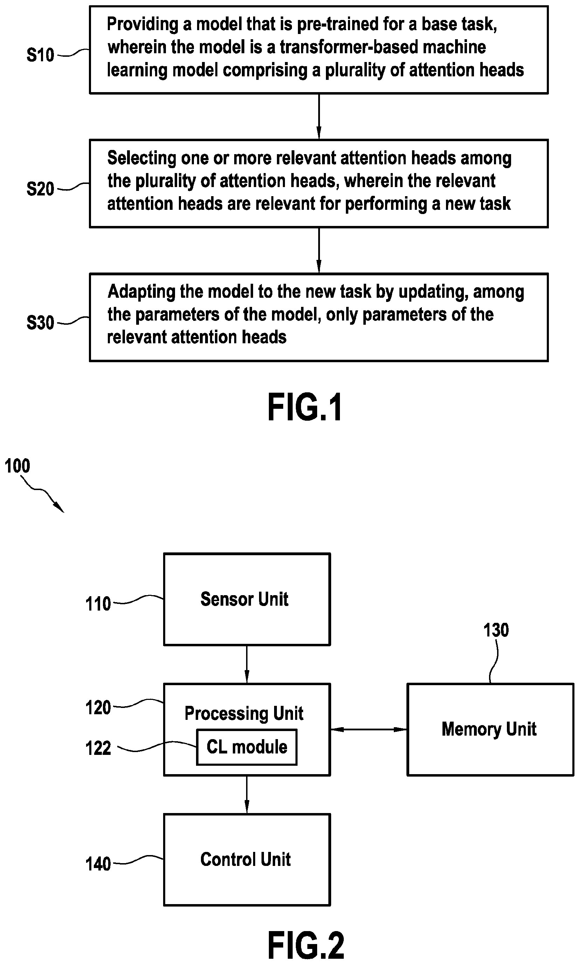

Methods and systems for adapting a transformer-based machine learning model to new tasks, which constitute exemplary embodiments of the present disclosure, are now going to be presented in relation with FIGS. 1-4.

The present adaptation method can be applied to any machine learning model with a transformer-based architecture. For example, the method can be applied to visual language models (VLM) and to large language models (LLM). Further, the method can be applied to a specific part of a larger model, such as an attention block.

In the following, the specific case wherein the method is applied to train a visual encoder of a visual language model will be described. However, the concept may be generalized to any transformer-based model.

In order to efficiently fine-tune the visual encoder without causing catastrophic forgetting of the knowledge acquired through pre-training of the visual encoder, a parameter specific update procedure is used.

In embodiments, in order to adapt the model to a new task, the method combines selective update of parameters within attention heads that are particularly relevant for the new task and application of a low-rank adaptation of the selected parameters.

More specifically, let define a dataset $\mathcal{D}_t = \{x_n, y_n\}_{n=1}^{N_t}$ for a task to which the model is pre-trained, wherein elements of the dataset comprises images, $x_n$, that are associated to text descriptions, $y_n$. The model is pre-trained on the dataset, $\mathcal{D}_t$, using a loss function defined by $L(\theta, \mathcal{D}_t)$, wherein $\theta$ is the full set of parameters of the model, that have been optimized through the pre-training.

In the context of the present invention, when a transformer-based model with a multi-head self-attention (with H heads) is considered, the corresponding multi-head mechanism is defined as a concatenation of multiple self-attention (SA) blocks as follows.

$$\begin{cases} \boldsymbol{q}^{(i)} = W_q^{(i)} Z^T, \ \boldsymbol{k}^{(i)} = W_k^{(i)} Z^T, \ \boldsymbol{v}^{(i)} = W_v^{(i)} Z^T \ \in \mathbb{R}^{D_h \times N} \\ A^{(i)} = \mathrm{softmax}(\boldsymbol{q}^{(i)T} \boldsymbol{k}^{(i)} / \sqrt{D_h}) \in \mathbb{R}^{N \times N} \\ SA_i(Z) = A^{(i)} \boldsymbol{v}^{(i)T} \in \mathbb{R}^{N \times D_h} \end{cases} \qquad \text{(Equation 1)}$$

In Equation 1, $Z \in \mathbb{R}^{N \times D}$ is the input matrix of N tokens (input data) of dimension D; and

$$W_q^{(i)}, W_k^{(i)}, W_v^{(i)}$$

are respectively the query, key, and value matrices of learnable parameters for head, *i*.

In view of the above, the multiple self-attention (MSA) function performed by the model can be written as follows.

$$MSA(Z) = Concat[SA_1(Z),..., SA_H(Z)]W_o \in \mathbb{R}^{N \times D} \qquad \text{(Equation 2)}$$

It is contemplated to update parameters of the attention heads that cause the largest changes in the loss function, $L(\theta, \mathcal{D}_t)$. To this aim, the gradient of the loss with respect to the parameters of each attention head is calculated.

Once the gradient losses have been obtained for each parameter, one or more particularly relevant heads (and the parameters they comprise) are selected for the update.

In embodiments, the attention heads which are selected are those for which a cumulative distribution to the change of the loss function is the largest.

Since the matrices $W_q^{(i)}, W_k^{(i)}, W_v^{(i)}$ comprise all the parameters of the head, i, an importance score can be determined for each head by adding the squared values of their corresponding gradients as follows.

$$s_i = \sum_{m,l} \left\{ \left(G_q^{(i)}(m,l)\right)^2 + \left(G_k^{(i)}(m,l)\right)^2 + \left(G_v^{(i)}(m,l)\right)^2 + \left(G_o^{(i)}(m,l)\right)^2 \right\}$$

$$\text{(Equation 3)}$$

In Equation 3, $G_q^{(i)} = \nabla_{W_q^{(i)}} L; \quad G_k^{(i)} = \nabla_{W_k^{(i)}} L, \quad G_v^{(i)} = \nabla_{W_v^{(i)}} L,$ and $\nabla_{\tilde{W}_o^{(i)}} L$ are the gradients of the weight matrices $W_q^{(i)}, W_k^{(i)}, W_v^{(i)}$, and $W_o^{(i)}$. In particular, $W_o^{(i)}$ is a general projection matrix that is multiplied by the output of the attentions heads.

As the matrix, $W_o^{(i)}$, is generic and is only a linear projection, it is kept frozen during the update of the model. Based on the previously calculated importance of the attention heads, only the parameters of the top-k heads in terms of largest measure ($s_i$) are updated on the current task, t.

However, the number of parameters remains high due to the large size of the weight matrices. Therefore, the original weights are parametrized using a low-rank adaptation method, derived from [REF 4]. This provides a reduction of the computational requirements.

The weight matrices are therefore parametrized as follows.

$$\begin{cases} \left(W_q^{(i)}\right)' = W_q^{(i)} + A_q^{(i)} B_q^{(i)} \\ \left(W_k^{(i)}\right)' = W_k^{(i)} + A_k^{(i)} B_k^{(i)} \\ \left(W_v^{(i)}\right)' = W_v^{(i)} + A_v^{(i)} B_v^{(i)} \end{cases} \qquad \text{(Equation 4)}$$

In Equation 4, the matrices W are the matrices before update, the matrices W' are the modified matrices after update, and the matrix product A.B is the learned update matrix whose parameters are updated.

Once the weight matrices have been parametrized as expressed in Equation 5, the parameters of the modified weight matrices, W', are updated instead of the parameters of the original weight matrices, W. As the modified weight matrices have a lower rank, fewer parameters need to be updated, which limits computational requirements.

Aspects of a system according to the present disclosure are illustrated in FIG.2. The system comprises a sensor unit 110, a processing unit 120 communicatively coupled with a memory unit 130, and a control unit 140. The processing unit 120 is configured to implement steps of a method according to the present disclosure using a continual learning module 122.

The system 100 can be used for adapting controls of a machine or device to varying situations and environments (for example types and behavior of obstacles, and lighting conditions). The varying situations and environments are determined by input data that are captured by the sensor unit 110 which transfers such data to the continual learning module 122. Such module 122 comprises transformer-based models, generally pre-trained, which are adapted to the varying situations and environments (corresponding to varying tasks) by fine-tuning of models through continual learning based on the method according to the present disclosure. Further, the continuously adapted model processes the input data and provides output data that are transmitted to the control unit 140 in order to enhance the control of the machine or device.

In embodiments, the system is a driver assistance system of a vehicle. In particular, the system may be part of an advanced driver assistance system (ADAS). To this end, the sensor unit may comprise, for example, visible or infrared cameras, inertial measurements units 110, Lidar-based sensors, or any kind of sensors that can provide useful data for controlling the vehicle. The memory unit 130 can advantageously be configured to store data corresponding to previous tasks in order to enhance the adaptation of the model to new tasks.

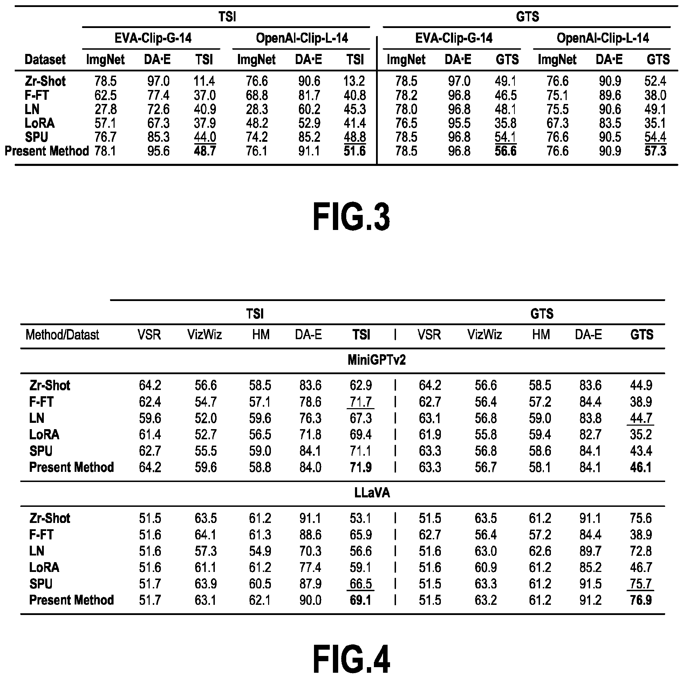

Results of embodiments of the present method when applied to the adaptation of transformer-based models to different tasks on known datasets and comparison with known methods are presented in reference to Figs.3-4. The best results obtained on the target dataset are highlighted in bold, and the second best results are underscored

In particular, the results in Figs. 3-4 are obtained when applying methods to datasets based on the "Toyota Smarthome" (TSI) reference dataset (see [REF 5]) and on the "German Training Dataset" (GTS) reference dataset (see [REF 6]) as indicated in the upper rows. Specifically, the TSI dataset is processed as an image classification dataset where the target is to recognize the activity depicted in each image. Frames are extracted from videos and a training set of approximately 10k images and a test set of approximately 5k images are created. 22 represented classes of activities are considered.

Further, performances are compared with other specific datasets which are specifically constructed:

- DA-E: DA-E is a synthetic dataset that is constructed for assessing relative performance compared with the real datasets (TSI/GTS). Specifically, the same 22 classes of activities represented in the TSI or GTS dataset are considered and are used as query in DALL-E2 to generate representative images of these activities. 30 images per action are extracted, for a total of 660 images, all of them used as a test set.
- ImgNet dataset: the ImageNet model is used as a control set to measure how much the visual encoder (CLIP) model performance deteriorates after being tuned on other datasets (TSI/GTS).

Fig. 3 shows the results obtained when applying the present method and known methods to the fine-tuning of a visual encoder for classification tasks in a few-shots approach. The visual encoder takes an image as an input and generates an image embedding as an output. A similarity can then be computed with different candidate text embeddings and the closest text embedding is the one that is produced as output. Specifically, in order to obtain the results of Fig.3, a frozen text encoder is used which encodes the text embedding of different classes and then similarity between image embedding and text embedding is estimated. The class with the most similar text is subsequently assigned to that image.

In order to obtain the results shown in Fig.3, multiple consecutive sessions of update with small number of examples are performed and the performance of the multiply updated model is evaluated. In particular, the table in Fig. 3 reports the accuracy on each test dataset at the end of the 20 successive updates (20 shots).

The baseline used as a reference to compare the results (denoted by "Zr-shot") corresponds to a pre-trained classification model (CLIP model) that is not updated any further.

The known fine-tuning methods to which the present method is compared are: "F-FT": full fine-tuning of all model parameters; "LN": optimization of the layer norm parameters of the model (see [REF 7]); "LoRA": Low rank updates are applied to all the transformer layers (see [REF 4]); "SPU": Selected Parameter Update, wherein only selected parameters in the multilayer perceptron layer of the model are updated (see [REF 8]). The present method is denoted by "LoRSU" (Low Rank Structured Update).

In Fig.3, performances of the training methods are assessed by using visual language model wherein the visual encoder (based on a CLIP model) is updated through the present method and other methods. Further, two versions of the visual encoder model under training are considered:

- OpenAI-CLIP-L-14 is a large vision transformer based on CLIP that is trained by OpenAI.
- EVA-CLIP-G-14 is an improved vision transformer that is improved with additional optimization and augmentation techniques (see [REF 9]) and pre-trained on the LAION-400M dataset (see [REF 10]).

Fig. 3 shows that the present method improves on the target dataset with a considerable margin compared to other methods. In particular, the present method achieves the least negligible deterioration (<2%) on ImgNet and DA-E.

Fig. 4 shows the results obtained using a full visual language model with a visual encoder that is updated beforehand (and frozen) using various training methods. Further, the performance are evaluated using two different pre-trained VLMs. Specifically, the "MiniGPTv2" model (see [REF 12]) and the "LLaVA" model (see [REF 13]) are considered and the visual encoders that are intrinsic to such models are replaced by a visual encoder based on CLIP that has been adapted to the new task using the present method. Then, in order to evaluate the performance of the modified VLM comprising the fine-tuned visual encoder, such modified VLM are applied to perform a VQA (visual question answering) task.

The known fine-tuning methods to which the present method is compared in Fig.4 comprise the methods mentioned when previously describing Fig.3.

Further, to evaluate how the VLM under study is performing before and after the vision encoder adaptation, 3 visual question answering (VQA) datasets are considered: the VizWiz dataset (see [REF 14]), the VSR dataset (see [REF 13]), and the HM dataset (see [REF 15]). Further, the previously discussed TSI, GTS and DA-E datasets are converted into VQA datasets and used for further evaluating the performance of the adaptation methods.

Specifically, in order to obtain the results shown in Fig.4, VQA results are reported under a 20-shot continual learning setting similar to the one discussed when describing Fig.3.

The results indicated in Fig.4 show that the present method provides enhanced performance compared to other methods, and that plugging the fine-tuned visual encoder model in a visual language model affects the performance of the VQA task.

In particular, for TSI dataset, the present method outperforms the other methods, with a specific improvement margin of 2.6% when considering the LLaVa model. Further, the present adaptation method shows the least degradation on the VQA datasets other than TSI.

Further, the results of Fig.4 show that the present method even provides enhanced performance on VQA datasets other than TSI for MiniGPTv2 with a small margin. With respect to GTS, the present method was the only method to improve the performance of VQA on GTS. Overall, it can be stated that the present adaptation method is able to improve the performance on the VQA tasks for both VLMs.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense

## Claims

1. A computer-implemented method for adapting a machine learning model to new tasks, the method comprising:

   - (S10) providing a model that is pre-trained for a base task, wherein the model is a transformer-based machine learning model comprising a plurality of attention heads;
   - (S20) selecting one or more relevant attention heads among the plurality of attention heads, wherein the relevant attention heads are relevant for performing a new task; and
   - (S30) adapting the model to the new task by updating, among the parameters of the model, only parameters of the relevant attention heads.

2. The method of claim 1, wherein the transformer-based machine learning model comprises a plurality of layers and the plurality of attention heads are comprised in at least two different layers of the plurality of layers; and wherein the step (S20) of selecting one or more relevant attention heads among the plurality of attention heads comprises:

   - selecting one or more relevant attention heads per layer by considering independently each layer of the model.

3. The method of claim 1, wherein the step (S20) of selecting one or more relevant attention heads among the plurality of attention heads comprises:

   - selecting one or more relevant attention heads of the model by considering globally all the layers of the model.

4. The method of any of claims 1 to 3, wherein the step (S20) of selecting one or more relevant attention heads among the plurality of attention heads comprises:

   - providing a loss function evaluating the performance of the model applied to the new task; wherein the relevant attention heads are selected among the attention heads that cause a largest change in the loss function for data points corresponding to the new task.

5. The method of any of claims 1 to 4, wherein the step (S20) of selecting one or more relevant attention heads among the plurality of attention heads comprises:

- for each attention head, calculating gradients of the loss function with respect to each parameter of the attention head for data points corresponding to the new task;
- for each attention head, calculating a cumulative gradient by adding squared values of the calculated gradients of the loss function; and
- selecting attention heads that have the largest cumulative gradient.

6. The method of any of claims 1 to 5, wherein the step of (S30) adapting the model to the new task by updating, among the parameters of the model, only parameters of the relevant attention heads, comprises:

- applying a low rank update of the parameters of the relevant attention heads in order to update only an ensemble of additional parameters that are linearly added to the parameters of the relevant attention heads.

7. The method of any of claims 1 to 6, wherein steps of the method are repeated so that the model is successively adapted to a plurality of new tasks.

8. The method of any of claims 1 to 7, wherein the model comprises a multi-layer perceptron (MLP) layer; and the method further comprises:

- selecting relevant parameters of the multi-layer perceptron layer, wherein the relevant parameters are relevant for performing the new task;
- when adapting the model to the new task, updating the multi-layer perceptron layer by modifying only some or all of the relevant parameters of the multi-layer perceptron layer.

9. The method of any of the preceding claims, wherein the transformer-based model is a visual encoder model configured for extracting visual features from images, such features being representative of global dependencies in the images.

10. A method for adapting a visual language model to a visual captioning task, comprising:

- providing a pre-trained visual language model comprising a pre-trained visual encoder model and a pre-trained language model;
- adapting the visual encoder model to a visual feature extraction task using the method of claim 9;
- freezing the parameters of the adapted visual encoder model;
- using the adapted vision encoder model to extract features from input images; and
- using the language model to generate, from the extracted features, visual captioning data representative of a descriptive caption of the input images.

11. A driver assistance system (100) comprising:

- a sensor unit (110) configured to capture data from one or more sensors, wherein the data includes information about a driving scene surrounding a vehicle;
- a processing unit (120) communicatively coupled to the sensor unit (110) comprising:
- a continual learning module (122) configured to process the captured data and continuously update parameters of a transformer-based machine learning model based on the incoming data, in order to learn and adapt to changing driving scenarios over time, wherein the machine learning model is updated using a method according to any of claims 1 to 9 in order to retain knowledge from previously captured data while incorporating new data, wherein the processing unit (120) is configured to receive processed data from the machine learning model and generate real-time predictions based on the driving scene;
- a memory unit (130) configured to store previously captured data used for continual learning of the machine learning model; and
- a control unit (140) configured to provide control signals to controls of the vehicle based on the real-time predictions.

12. A computer program including instructions for executing the steps of the method according to any of claims 1 to 10 when said program is executed by a computer.

13. A recording medium readable by a computer and having recorded thereon a computer program including instructions for executing the steps of the method according to any of claims 1 to 10.

**Amended claims in accordance with Rule 137(2) EPC.**

1. A computer-implemented method for adapting a machine learning model to new tasks, the method comprising:

   - (S10) providing a model that is pre-trained for a base task, wherein the model is a transformer-based machine learning model comprising a plurality of attention heads;
   - (S20) selecting one or more relevant attention heads among the plurality of attention heads, wherein the relevant attention heads are relevant for performing a new task; and
   - (S30) adapting the model to the new task by updating, among the parameters of the model, only parameters of the relevant attention heads;
   wherein the transformer-based model is a visual encoder model configured for extracting visual features from images, such features being representative of global dependencies in the images.

2. The method of claim 1, wherein the transformer-based machine learning model comprises a plurality of layers and the plurality of attention heads are comprised in at least two different layers of the plurality of layers; and wherein the step (S20) of selecting one or more relevant attention heads among the plurality of attention heads comprises:

   - selecting one or more relevant attention heads per layer by considering independently each layer of the model.

3. The method of claim 1, wherein the step (S20) of selecting one or more relevant attention heads among the plurality of attention heads comprises:

   - selecting one or more relevant attention heads of the model by considering globally all the layers of the model.

4. The method of any of claims 1 to 3, wherein the step (S20) of selecting one or more relevant attention heads among the plurality of attention heads comprises:

   - providing a loss function evaluating the performance of the model applied to the new task; wherein the relevant attention heads are selected among the attention heads that cause a largest change in the loss function for data points corresponding to the new task.

5. The method of any of claims 1 to 4, wherein the step (S20) of selecting one or more relevant attention heads among the plurality of attention heads comprises:

   - for each attention head, calculating gradients of the loss function with respect to each parameter of the attention head for data points corresponding to the new task;
   - for each attention head, calculating a cumulative gradient by adding squared values of the calculated gradients of the loss function; and
   - selecting attention heads that have the largest cumulative gradient.

6. The method of any of claims 1 to 5, wherein the step of (S30) adapting the model to the new task by updating, among the parameters of the model, only parameters of the relevant attention heads, comprises:

   - applying a low rank update of the parameters of the relevant attention heads in order to update only an ensemble of additional parameters that are linearly added to the parameters of the relevant attention heads.

7. The method of any of claims 1 to 6, wherein steps of the method are repeated so that the model is successively adapted to a plurality of new tasks.

8. The method of any of claims 1 to 7, wherein the model comprises a multi-layer perceptron (MLP) layer; and the method further comprises:

   - selecting relevant parameters of the multi-layer perceptron layer, wherein the relevant parameters are relevant for performing the new task;
   - when adapting the model to the new task, updating the multi-layer perceptron layer by modifying only some or all of the relevant parameters of the multi-layer perceptron layer.

9. A method for adapting a visual language model to a visual captioning task, comprising:

- providing a pre-trained visual language model comprising a pre-trained visual encoder model and a pre-trained language model;
- adapting the visual encoder model to a visual feature extraction task using the method according to any of claims 1 to 8;
- freezing the parameters of the adapted visual encoder model;
- using the adapted vision encoder model to extract features from input images; and
- using the language model to generate, from the extracted features, visual captioning data representative of a descriptive caption of the input images.

10. A driver assistance system (100) comprising:

- a sensor unit (110) configured to capture data from one or more sensors, wherein the data includes information about a driving scene surrounding a vehicle;
- a processing unit (120) communicatively coupled to the sensor unit (110) comprising:
- a continual learning module (122) configured to process the captured data and continuously update parameters of a transformer-based machine learning model based on the incoming data, in order to learn and adapt to changing driving scenarios over time, wherein the machine learning model is updated using a method according to any of claims 1 to 9 in order to retain knowledge from previously captured data while incorporating new data, wherein the processing unit (120) is configured to receive processed data from the machine learning model and generate real-time predictions based on the driving scene;
- a memory unit (130) configured to store previously captured data used for continual learning of the machine learning model; and
- a control unit (140) configured to provide control signals to controls of the vehicle based on the real-time predictions.

11. A computer program including instructions for executing the steps of the method according to any of claims 1 to 9 when said program is executed by a computer.

12. A recording medium readable by a computer and having recorded thereon a computer program including instructions for executing the steps of the method according to any of claims 1 to 9.

S10 — Providing a model that is pre-trained for a base task, wherein the model is a transformer-based machine learning model comprising a plurality of attention heads

S20 — Selecting one or more relevant attention heads among the plurality of attention heads, wherein the relevant attention heads are relevant for performing a new task

S30 — Adapting the model to the new task by updating, among the parameters of the model, only parameters of the relevant attention heads

## FIG.1

**100**

110 — Sensor Unit

130

120 — Processing Unit

122 — CL module

Memory Unit

140 — Control Unit

## FIG.2

| | TSI | | | | | | GTS | | | | | |
|---|---|---|---|---|---|---|---|---|---|---|---|---|
| | EVA-Clip-G-14 | | | OpenAI-Clip-L-14 | | | EVA-Clip-G-14 | | | OpenAI-Clip-L-14 | | |
| Dataset | ImgNet | DA·E | TSI | ImgNet | DA·E | TSI | ImgNet | DA·E | GTS | ImgNet | DA·E | GTS |
| Zr-Shot | 78.5 | 97.0 | 11.4 | 76.6 | 90.6 | 13.2 | 78.5 | 97.0 | 49.1 | 76.6 | 90.9 | 52.4 |
| F-FT | 62.5 | 77.4 | 37.0 | 68.8 | 81.7 | 40.8 | 78.2 | 96.8 | 46.5 | 75.1 | 89.6 | 38.0 |
| LN | 27.8 | 72.6 | 40.9 | 28.3 | 60.2 | 45.3 | 78.0 | 96.8 | 48.1 | 75.5 | 90.6 | 49.1 |
| LoRA | 57.1 | 67.3 | 37.9 | 48.2 | 52.9 | 41.4 | 76.5 | 95.5 | 35.8 | 67.3 | 83.5 | 35.1 |
| SPU | 76.7 | 85.3 | 44.0 | 74.2 | 85.2 | 48.8 | 78.5 | 96.8 | 54.1 | 76.6 | 90.5 | 54.4 |
| Present Method | 78.1 | 95.6 | 48.7 | 76.1 | 91.1 | 51.6 | 78.5 | 96.8 | 56.6 | 76.6 | 90.9 | 57.3 |

# FIG.3

| | TSI | | | | | | GTS | | | | |
|---|---|---|---|---|---|---|---|---|---|---|---|
| Method/Datast | VSR | VizWiz | HM | DA-E | TSI | I | VSR | VizWiz | HM | DA-E | GTS |
| | | | | | MiniGPTv2 | | | | | | |
| Zr-Shot | 64.2 | 56.6 | 58.5 | 83.6 | 62.9 | I | 64.2 | 56.6 | 58.5 | 83.6 | 44.9 |
| F-FT | 62.4 | 54.7 | 57.1 | 78.6 | 71.7 | I | 62.7 | 56.4 | 57.2 | 84.4 | 38.9 |
| LN | 59.6 | 52.0 | 59.6 | 76.3 | 67.3 | I | 63.1 | 56.8 | 59.0 | 83.8 | 44.7 |
| LoRA | 61.4 | 52.7 | 56.5 | 71.8 | 69.4 | I | 61.9 | 55.8 | 59.4 | 82.7 | 35.2 |
| SPU | 62.7 | 55.5 | 59.0 | 84.1 | 71.1 | I | 63.3 | 56.8 | 58.6 | 84.1 | 43.4 |
| Present Method | 64.2 | 59.6 | 58.8 | 84.0 | 71.9 | I | 63.3 | 56.7 | 58.1 | 84.1 | 46.1 |
| | | | | | LLaVA | | | | | | |
| Zr-Shot | 51.5 | 63.5 | 61.2 | 91.1 | 53.1 | I | 51.5 | 63.5 | 61.2 | 91.1 | 75.6 |
| F-FT | 51.6 | 64.1 | 61.3 | 88.6 | 65.9 | I | 62.7 | 56.4 | 57.2 | 84.4 | 38.9 |
| LN | 51.6 | 57.3 | 54.9 | 70.3 | 56.6 | I | 51.6 | 63.0 | 62.6 | 89.7 | 72.8 |
| LoRA | 51.6 | 61.1 | 61.2 | 77.4 | 59.1 | I | 51.6 | 60.9 | 61.2 | 85.2 | 46.7 |
| SPU | 51.7 | 63.9 | 60.5 | 87.9 | 66.5 | I | 51.5 | 63.3 | 61.2 | 91.5 | 75.7 |
| Present Method | 51.7 | 63.1 | 62.1 | 90.0 | 69.1 | I | 51.5 | 63.2 | 61.2 | 91.2 | 76.9 |

# FIG.4

## EUROPEAN SEARCH REPORT

Europäisches Patentamt
European Patent Office
Office européen des brevets

**Application Number**

EP 24 18 9887

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | A. GUI AND H. XIAO: "HiFi: High-Information Attention Heads Hold for Parameter-Efficient Model Adaptation", ARXIV.ORG:2305.04573, 8 May 2023 (2023-05-08), XP091505234, * abstract * * sections 1 and 3, appendix A.5 * ----- | 1-13 | INV. G06N3/096 G06N3/045 G06V10/82 |
| X | CHONG LI ET AL.: "Interpreting and Exploiting Functional Specialization in Multi-Head Attention under Multi-task Learning", ARXIV.ORG:2310.10318, 16 October 2023 (2023-10-16), XP091637277, * sections 1, 3.2, 4, 4.2, 5, and 6.3 * ----- | 1-13 | |
| A | P. MOLCHANOV ET AL.: "Importance Estimation for Neural Network Pruning", 2019 IEEE/CVF CONFERENCE ON COMPUTER VISION AND PATTERN RECOGNITION (CVPR), 15 June 2019 (2019-06-15), pages 11256-11264, XP033686552, DOI: 10.1109/CVPR.2019.01152 [retrieved on 2020-01-08] * section 3 * ----- | 5 | **TECHNICAL FIELDS SEARCHED (IPC)**<br><br>G06N |
| A | R. LI ET AL.: "T3-Vis: a visual analytic framework for Training and fine-Tuning Transformers in NLP", ARXIV.ORG:2108.13587, 31 August 2021 (2021-08-31), XP091041004, * figure 3, appendix A.1 * ----- -/-- | 5 | |

The present search report has been drawn up for all claims

| Place of search | Date of completion of the search | Examiner |
|---|---|---|
| The Hague | 20 January 2025 | Millet, Guillaume |

EPO FORM 1503 03.82 (P04C01)

page 1 of 2

Europäisches
Patentamt
European
Patent Office
Office européen
des brevets

# EUROPEAN SEARCH REPORT

**Application Number**

EP 24 18 9887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | K. ZHENG ET AL.: "Regularized Mask Tuning: Uncovering Hidden Knowledge in Pre-trained Vision-Language Models", ARXIV.ORG:2307.15049, 27 July 2023 (2023-07-27), XP091576070, * abstract * * sections 1 and 3 * ----- | 10 | |
| A | H. ZHUANG ET AL.: "Online Analytic Exemplar-Free Continual Learning with Large Models for Imbalanced Autonomous Driving Task", ARXIV.ORG:2405.17779, 28 May 2024 (2024-05-28), XP091770314, * sections I, II-C, II-D * ----- | 11 | |

TECHNICAL FIELDS
SEARCHED     (IPC)

The present search report has been drawn up for all claims

| Place of search | Date of completion of the search | Examiner |
|---|---|---|
| The Hague | 20 January 2025 | Millet, Guillaume |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................................
& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GHOSH, AKASH** ; **ACHARYA, ARKADEEP** ; **SAHA, SRIPARNA et al.** Exploring the frontier of vision-language models: A survey of current methodologies and future directions. *arXiv:2404.07214*, 2024
- **RADFORD, ALEC** ; **KIM, JONG WOOK** ; **HALLACY, CHRIS et al.** Learning transferable visual models from natural language supervision.. *International conference on machine learning. PMLR*, 2021, 8748-8763
- **ZHU, DEYAO** ; **CHEN, JUN** ; **SHEN, XIAOQIAN et al.** Minigpt-4: Enhancing vision-language understanding with advanced large language models.. *arXiv:2304.10592*, 2023
- **HU, EDWARD J.** ; **SHEN, YELONG** ; **WALLIS, PHILLIP et al.** Lora: Low-rank adaptation of large language models. *arXiv:2106.09685*, 2021
- **DAS, SRIJAN** ; **DAI, RUI** ; **KOPERSKI, MICHAL et al.** Toyota smarthome: Real-world activities of daily living.. *Proceedings of the IEEE/CVF international conference on computer vision.*, 2019, 833-842
- **STALLKAMP, JOHANNES** ; **SCHLIPSING, MARC** ; **SALMEN, JAN et al.** Man vs. computer: Benchmarking machine learning algorithms for traffic sign recognition.. *Neural networks*, 2012, vol. 32, 323-332
- **SHYSHEYA, ALIAKSANDRA** ; **BRONSKILL, JOHN** ; **PATACCHIOLA, MASSIMILIANO et al.** Fit: Parameter efficient few-shot transfer learning for personalized and federated image classification.. *arXiv:2206.08671*, 2022

- **ZHANG, WENXUAN** ; **JANSON, PAUL** ; **ALJUNDI, RAHAF et al.** Overcoming Generic Knowledge Loss with Selective Parameter Update.. *arXiv:2308.12462*, 2023
- **SUN, QUAN** ; **FANG, YUXIN** ; **WU, LEDELL et al.** Eva-clip: Improved training techniques for clip at scale.. *arXiv:2303.15389*, 2023
- **SCHUHMANN, CHRISTOPH** ; **VENCU, RICHARD** ; **BEAUMONT, ROMAIN et al.** Laion-400m: Open dataset of clip-filtered 400 million image-text pairs.. *arXiv:2111.02114*, 2021
- **VASWANI, ASHISH** ; **SHAZEER, NOAM** ; **PARMAR, NIKI et al.** Attention is all you need.. *Advances in neural information processing systems*, 2017, vol. 30
- **CHEN, JUN** ; **ZHU, DEYAO** ; **SHEN, XIAOQIAN et al.** Minigpt-v2: large language model as a unified interface for vision-language multi-task learning.. *arXiv:2310.09478*, 2023
- **LIU, HAOTIAN** ; **LI, CHUNYUAN** ; **WU, QINGYANG et al.** Visual instruction tuning. *Advances in neural information processing systems*, 2024, vol. 36
- **GURARI, DANNA** ; **LI, QING** ; **STANGL, ABIGALE J. et al.** Vizwiz grand challenge: Answering visual questions from blind people. In. *Proceedings of the IEEE conference on computer vision and pattern recognition.*, 2018, 3608-3617
- **KIELA, DOUWE** ; **FIROOZ, HAMED** ; **MOHAN, ARAVIND et al.** The hateful memes challenge: Detecting hate speech in multimodal memes.. *Advances in neural information processing systems*, 2020, vol. 33, 2611-2624